# EUROPEAN PATENT APPLICATION

(11) **EP 2 720 446 A2**
(43) Date of publication of application: **16.04.2014**
(21) Application number: 13187423.2
(22) Date of filing: 04.10.2013
(51) Int. Cl.: H04M 1/725

(54) **Mobile computing and communications**

(30) Priority: 15.10.2012 GB 201218417
(71) Applicant: Renergy Sarl, 1331 Luxembourg (LU)
(72) Inventor: Garcia, Gerado David Gomez-Sainz, London W2 2LH (GB)
(74) Representative: MacLean, Martin David

(57) **Abstract**

A mobile communication and computing device comprising a display screen having at least two edges, each of which edges appears frameless and is adapted and/or configured for releasably joining the device to a matching edge of another device with a display screen to provide a larger, substantially seamless display screen, the devices both being adapted selectably to share functionality when joined together. In addition, a system is described for connecting a portable communication and computing device functionally to another portable electronic device, both devices having a display screen and a software-enabled operating system (OS) which controls various functions and/or resources of the respective device, wherein each OS is adapted, in response to connection of the two devices, to configure its device to operate as either a "master" or a "slave" to the other device OS for sharing functionality and/or resources between the connected devices.

## Description

### FIELD OF THE INVENTION

This invention relates to handheld mobile communication and computing devices, in particular but not exclusively to mobile telephone devices.

### BACKGROUND ART

Handheld or portable mobile communication and computing devices such as mobile telephones and "tablet" style devices are known; the former are generally compact and easily portable, but have screens which are relatively small, whereas the latter have larger screens but are larger in overall size and therefore cumbersome and less easily portable. Both also have differing functionality: for example, some devices have no camera, or only a camera facing in one direction, some have greater or lesser processing power and/or data storage, and some tablets have no phone. A user wishing to have broad and different functionality is therefore obliged to carry several different devices in order to be able to access the desired range of different functions, or to have access to functions which manufacturers do not provide - for example, many users want different phone numbers, such as for business and personal calls, and although multiple sim card mobile phones are available, these are not particularly versatile or practical to use as each line cannot be separated to operate independently, and these phones are normally hampered by the relatively small screen. Having to carry conventional multiple devices is also complicated by the lack of a common standard for power/charging devices, in terms of connecting plugs and leads, or even a change in power or data connections for new models, with the result that a user has to purchase another charger or connection lead. In addition to being cumbersome, carrying multiple devices requires users to switch between devices for different functions, and/or using one function on one device often leaves other functions or resources on that device under-utilised and is wasteful, particularly where two devices are connected via a common USB connection.

### SUMMARY OF THE INVENTION

The present invention therefore provides, in a first aspect, a portable telecommunication and computing device, such as a mobile phone, comprising a display screen having at least two edges, each of which edges is or appears frameless and is adapted and/or configured for releasably joining the device to a matching edge of another portable device with a display screen to provide a larger, substantially seamless display screen, the devices both being adapted selectably to share functionality when joined together, wherein the device comprises a central processor unit (CPU) containing a software-enabled operating system (OS), wherein the OS is adapted to configure its device as a "master" or "slave" to the OS of another device to which it is releasably joined for sharing functionality between the devices, and wherein the OS is adapted selectably to give different and personalized levels of access of the "master" device OS to the personal and/or volatile resources of the "slave" device for sharing functionality between the devices.

Most portable devices which incorporate display screens have a frame, or rim, which extends around the circumference of the screen; this frame protects the edges of the screen, and also hides the electrical connections which drive the rows of pixels which make up the display. Thus, putting two conventional display screens next to each other, side by side, leaves a noticeable interruption between the two display screens, so that they cannot properly or comfortably be viewed as a single screen. However, by making the side by side edges appear frameless (such as by facing the screen with a transparent lens which has the ability to refract light emitted adjacent the frame), by using a glass frame with optical properties to protect the edge and display the screen at the same time, or by making the edges actually frameless (by folding the electrical connectors around behind the screen, for example), it is possible to make the combined display screens appear as if they were one larger screen, with the join between them being barely noticeable. A "matching edge" should be construed as meaning an edge which is compatible with that of the first device, both in terms of having a similarly frameless edge and also in terms of having compatible releasable joining means and compatibly adapted for sharing functionality. With the devices being adapted to share functionality, as will be further described below, the combined devices can share functions - the computing power of each can be combined to give more processing power, which could be advantageous for some applications (gaming applications, for example), for multitasking, or, where the display screens are touch screens, to allow bigger icons to be used - so as to enable the touch screens to be used as a "QWERTY" type keyboard, for example. Where the first device may have a single camera on the opposite side of the device to the display, and the other device has a camera on the same side as the display, the combined device could be used for video calls whilst also taking a photograph without having to turn the devices round. Because the device has two sides which are adapted for mounting to another device, there is no problem in matching two devices arising from handedness, and also it is possible to connect the device to two other suitably arranged devices, one on either side; it is also possible to connect more than three devices together, provided each connected device has two edges adapted for joining to other devices in the same way. Other advantages of the invention will become apparent from the remainder of the description.

The display screen may be substantially rectangular, as is common with many conventional mobile devices the two edges being on opposite sides/edges of the screen. This provides a straight edge along which the display screens are joined, and the configuration for releasably joining the device to another may be adapted to fold, to allow the two devices to hinge around the matching, joined edges. The selection of shared functionality may be effected by folding the two devices into an open position where the two display screens are substantially in the same plane. The joined devices could then resemble a book which, when closed can have the screens either closely adjacent (inside the "book") or spaced and facing apart (as if the "book" had been opened fully about its spine so the outer covers were adjacent); with such an arrangement, if the devices are two mobile phones, the two could operate as individual phones in either of these positions, with each screen accessing and displaying each individual phone's features, but be adapted to cooperate as a single device, and share functionality, features, and power when opened so that the display screens are in the same plane.

Considering the way in which two devices are releasably joined together, mechanical latches may be provided along at least one of the two edges, the latches being designed to hold the two devices together, such as in a male plug/female socket arrangement. Sockets adapted to receive the latches may be provided in one or both of the edges of the device, both to receive the male plug part of a latch and, additionally or alternatively, to receive lugs provided on an edge protector which can be plugged in to the sockets when it is not desired to connect the edge of the device to another device. The latches may be releasably received within the sockets of the first device, so they can be removed from one edge and inserted in the sockets on the other edge, so as to connect another device on either side, or they can be retractable or moveable so they can be switched to allow for connection on either side of the device. The latches may incorporate hinges, and/or they may incorporate plugs/sockets for electrical and/or functional connection between the devices (other than the purely mechanical latching). Alternatively, this functional connection could be wireless, and simply activated by the action of plugging two devices together. Additionally or alternatively, releasable mechanical connection between two devices could be by magnets, with at least one magnet provided adjacent one or both of the two edges and/or adjacent one or two corners of the device to keep the devices from wobbling, or accidentally hinging out of the open or closed positions.

Regarding the sharing of functionality between two or more joined devices, where each device comprises a central processor unit (CPU) containing a software-enabled operating system (OS), the or each OS may be adapted to configure its device as a "master" or "slave" to the other Operating systems (whereas only one OS can be configured as a Master at any given moment) for sharing functionality between the devices. The OS is provided in a mobile phone to control its own resources, such as the display screen, camera, CPU, memory, storage, etc. Adapting the operating system in this way gives the device the capability to connect with other compatible operating systems in other devices, and to share the functions of the devices, increasing screen size and processing power. It is also advantageous that any one of the devices may be the "master" or also the "slave" each time that it is connected to another compatible device, as this permits great flexibility. An owner of one device can connect with any other matching device belonging to someone else, and either benefit by using the additional, combined functionality, or allow the other person to benefit from the shared functionality.

One or each OS may be adapted selectably to give when in Slave configuration, different levels of access by the "master" device OS to its personal and/or volatile resources for personalized sharing functionality between the devices. This enables either full sharing of all the resources of both devices, or the owner of the "slave" device could set that device to restrict access by the "master" device to its personal resources, such as emails, applications, photographs, contacts, calendar and other personal data, but to allow full access to non-personal, or "volatile", resources such as RAM, processor, camera, GPS, display, speakers, microphones, telephone capability and other non-personal applications/functions.

One or each device may be connected to a further electronic device, the OS's being adapted to allow the "master" device OS full access to the functionality of the further device. This further device could be another mobile phone, tablet pc or other device or accessory to increase the functions or power of the combined devices, or an external storage device, such as an external hard disc drive, micro SD card or the like to increase the data storage space available.

In a second aspect, the invention provides a system for connecting a portable communication and computing device functionally to another portable electronic device, both devices having a display screen and a software-enabled operating system (OS) which controls various functions and/or resources of the respective device, wherein each OS is adapted, in response to connection of the two devices, to configure its device to operate as either a "master" or a "slave" to the other device OS for sharing functionality and/or resources between the connected devices and wherein the or each OS is adapted, on connection of the two devices, to select a sharing configuration which is effective in the device configured as a "slave" to allow a personalized level of access of the "master" device OS to the personal and/or volatile resources of the "slave" device", the level of access being input by a user into the "slave" device. This aspect of the invention may be combined with the first aspect or, as it may be embodied in the software of the OS, it may be used in devices without the frameless screen edges, or wirelessly, effectively sacrificing the full functionality of the shared display screens, but still retaining the ability to share all other personal and/or volatile resources.

The device OS's may be adapted to configure as a "master" or "slave" in response to an input made by a user to at least one of the devices. This input can be pre-set in a device, and stored in the device OS to be activated on connection of two matching devices, or it could be input in response to a prompt which is generated when two devices are connected. The or each OS may be adapted, on connection of the two or more devices, to select a sharing configuration, or profile, which is effective in the device configured as a "slave" to allow a level of access of the "master" device OS to the personal and/or volatile resources of the "slave" device", the level of access being input by a user into the "slave" device. Alternatively, the level of access could be input to the "master" device when the two devices are connected.

The or each OS may be adapted to store a plurality of sharing configurations, each having a different level of access to the personal and/or volatile resources of the device. This allows a device to have different levels of access according to the particular other device it is connected to; different access levels could then be applied between different members of a family, different work colleagues, etc.

The system may be such that both devices are adapted for releasable connection both functionally and mechanically and both devices are provided with cameras, the OS's could then be adapted to share camera functionality so that the "master" device OS can be used to control both cameras to operate in concert. This is advantageous where it is desired to take a photograph whilst conducting a teleconference, or particularly advantageous in enabling the two connected devices to act as a stereo camera, taking stereoscopic photographs or video film which can then be displayed on 3D screens, stored in memory or even transmitted in real time *via* the telecommunications facility of the device.

Connected devices may be adapted and/or configured to share display functionality, so that the "master" device OS can be used to control their display screens to operate in concert. In this way, the separate screens can act as one, so as to present an enlarged combined display to a user.

### BRIEF DESCRIPTION OF THE DRAWINGS

Embodiments of the separate aspects of the present invention will now be described by way of example, and with reference to the accompanying figures in which;
Figures 1a, 1b and 1c are illustrative views of a device in accordance with the invention as seen from the front, obliquely from the right and obliquely from the left respectively;
Figure 2 is a view of two of the devices of Figure 1, illustrating how they are releasably joined together;
Figure 3 is a view of the devices of Figure 2 when joined together and with their display screens in the same plane;
Figures 4a and 4b are views of the devices of Figure 3 in two folded states;
Figures 5a, 5b and 5c are illustrative views of, respectively, how three of the devices of Figure 1 may be joined together, when joined together with their display screens in the same plane, and in a folded state;
Figure 6a and 6b show four of the devices of Figure 1 joined together, in a folded state, and with their screens in the same plane respectively;
Figure 7 is a schematic view of the device of Figure 1 illustrating its electronic and functional arrangement;
Figure 8 illustrates a screen display on a device of Figure 1 in the process of being profiled for sharing;
Figure 9 illustrates the screen displays on two devices of Figure 1 joined together physically and in the process of being adapted to share functionality;
Figures 10a and 10b are views of a display on a single device, and of the shared display when two devices of Figure 1 are joined and are sharing functionality;
Figure 11 is a flowchart showing the process steps of profiling a device for sharing;
Figure 12 is a flowchart showing the process steps of enabling functionality sharing between two connected devices which are joined together, by adapting the respective operating systems of each device, and
Figure 13 is a flowchart showing the process steps in sharing a functional resource of two connected devices.

### DETAILED DESCRIPTION OF THE EMBODIMENTS

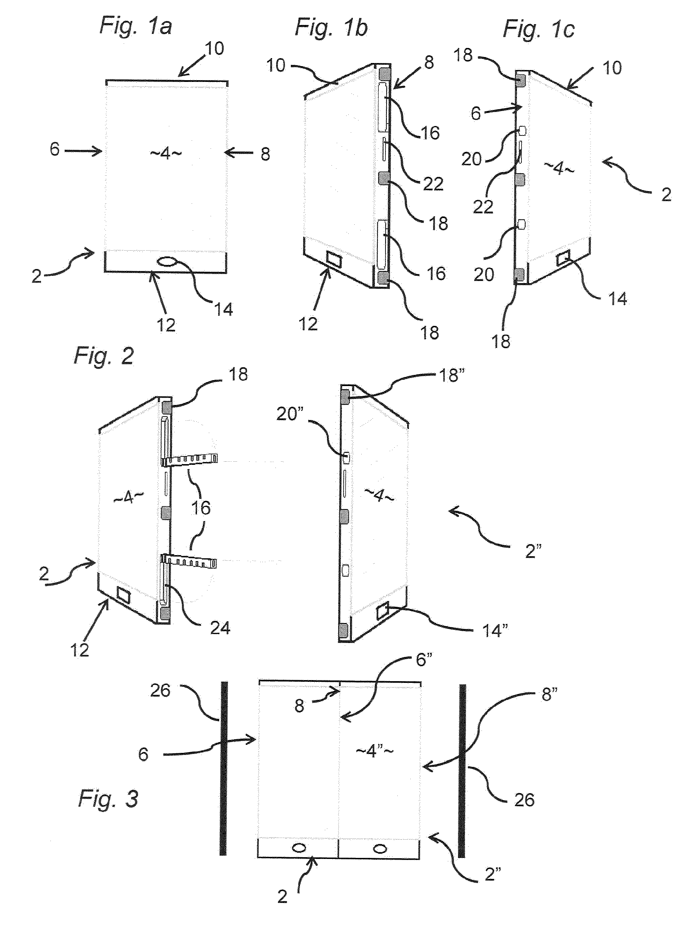

Figures 1a to c show a mobile phone 2 from different angles. The mobile phone 2 has a rectangular display screen 4, which is frameless on the left hand side 8 and on the right hand side 8. The mobile phone 2 is shown with a frame which protects the top and bottom edges 10, 12 of the device 2 and those edges of the screen 4. The bottom edge 12 part of the frame is shown with a button 14 purely as an illustration of a typical layout; there may be more or fewer buttons, and the display screen 4 may be a standard screen or a touch screen. The right hand edge 8 of the device 2 is shown in Figure 1b; it is provided with mechanical latches 16 and a number of magnets 18, both of which will be described further below in connection with Figure 2, but which serve to hold two such devices together. Figure 1 c shows the left hand edge 6 of the device 2 in more detail; this edge is also provided with magnets 18 (of opposite polarity to the magnets directly opposite on the other side 8 of the device) and also with a matching number of sockets 20, each being adapted to receive one of the mechanical latches 16. Each of the left and right hand edges 6, 8 is also shown with a slot, socket, or buttons 22 for connecting accessories, extra storage and the like, as is known.

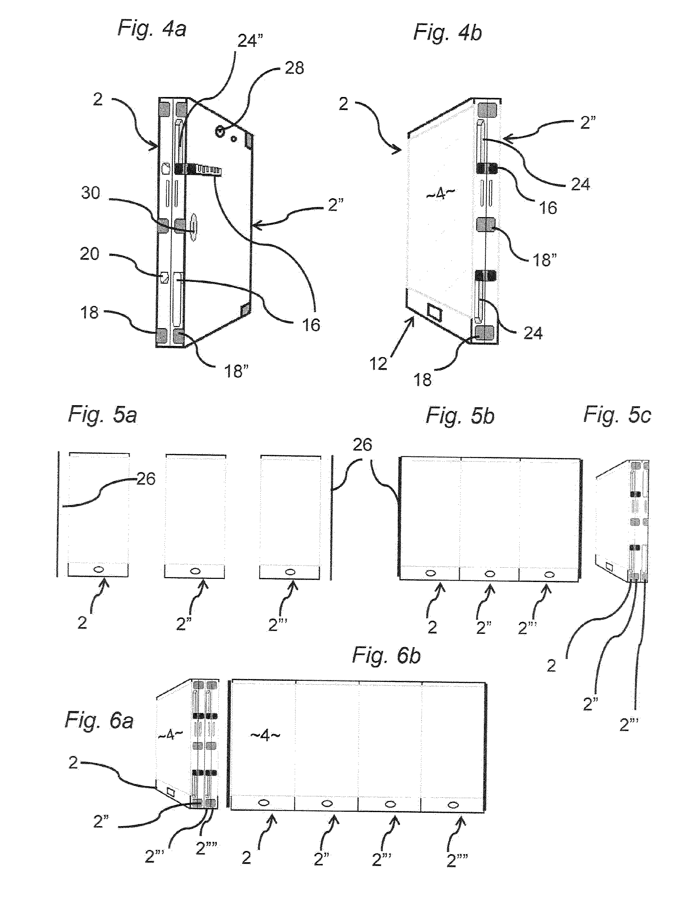

Referring now to Figure 2, the mechanical latches 16 of the device 2 are shown extended, having been rotated through the angle shown by the arrows, from slots 24 formed in the edges 6, 8 of device 2. The device 2 can then be located next to the edge of a similar device 2", so that the extended latches 16 align with the sockets 20; the two devices are then brought together so that the latches 16 slide into the sockets 20, thus joining the two devices 2, 2" together (as shown in Figure 3). The two devices 2, 2" are held together by a clamping mechanism (not shown) inside the sockets 20 which acts on the latches 16 and maintains both devices forcibly together with the electrical connectors located in the latches connected to electrical connectors inside the sockets 20. The magnets 18 of opposing polarities help maintain the devices firmly in the open or closed position so that there isn't undesirable wobbling of the devices out of their open or closed positions when being used as a tablet or being carried in a pocket. The devices can be easily separated when desired by pressing a release button 30 (see Figure 4a) on the device 2 and simultaneously pulling them apart sufficiently strongly so as to overcome the attraction of the magnets 18. Once the devices are separated, the latches 16 can be folded back into their slots 24.

When the two devices 2, 2" are joined together in the "open" position", as shown in Figure 3, with their display screens 4, 4" in the same plane and (as shown) both facing the user, the frameless nature of the abutting edges 8, 6" provides a very clean join between the two display screens, so that they appear very much like a single, large screen, with the line along which they are joined being hardly noticeable, with no significant gap or interruption. The frameless edges 6, 8, 6", 8" either appear frameless (such as by covering the screen with a transparent lens which has the ability to refract light emitted adjacent the frame, or by using a glass frame with optical properties to protect the edge and display the screen at the same time), or they are in fact frameless (which may be achieved by "folding" the electrical connectors around behind the screen, for example). The joined devices 2, 2" in Figure 3 are ready to use in a shared functionality mode, as will be described further below. Also shown in Figure 3 are two edge protectors 26; these are typically inexpensive rubber or resilient strips which have lugs (not shown) which engage releasably in matching holes (not shown) in the edges 6, 8 of the or each device 2, 2" (the lugs may alternatively be configured to engage with the sockets 20, holes 22 and/or the slots 24) - as shown, the protectors are intended to be attached to the right hand edge 8 of the first device 2 and the left hand edge 6" of the second device 2", so as to protect the exposed frameless edges 6, 8" and also to provide a more comfortable feel to a user holding and using the joined devices 2, 2".

Figures 4a and 4b illustrate other ways the joined devices may be configured. In Figure 4a the devices 2, 2" are releasably held together by the clamping mechanism and the magnets 18, 18" with the display screens 4, 4" facing inwards towards each other, so that the screens are protected by the body of the device (and the protectors 26, which are not shown, for clarity). The latches 16 are here not being used to join the devices 2, 2" together, although one latch 16" is shown extended and folded back against the rear face of the device 2" for illustration purposes. It is advantageous that the latches 16, 16" act as hinges, preferably allowing the devices 2, 2" to rotate through 360 degrees from the "closed" position in Figure 4a to the "opposed" position in Figure 4b - in which the devices 2, 2" are "back to back", so that the screens 4, 4"are facing outwardly away from each other. In the opposed position of Figure 4b, the devices are joined by the latches 16, shown in a hinged open state, and again held in position by the clamping mechanism and the magnets 18, 18". In both positions the respective display screens 4, 4" are not in the same plane (as that phrase is used and should be construed herein) but are instead parallel; in the closed position of Figure 4a the two devices 2, 2" are joined mainly for ease of carriage rather than use. In the opposed position of Figure 4b, the devices could be linked functionally, although the screens would not be combined to make a larger screen, or each device could be operated separately, as a separate mobile phone for example, with no sharing of functionality between devices (or only limited sharing, such as sharing of battery power). Also shown in Figure 4a is a camera lens 28, and the clamping mechanism release button 30.

Figures 5 a to c and 6a and b illustrate how three or four devices 2, "2, 2"', 2"" may be joined and used to provide a much larger combined screen, with the joined phones being folded up concertina-fashion (Figures 5c and 6a); it will be apparent that, with an odd number of devices, as in Figure 5, when folded there will always be one display screen facing outwards, whereas with an even number of devices there could be either no outwardly facing screens or two (as in Figures 4a and b). It will also be apparent that, although illustrated with two frameless edges, each device may have three or all four edges frameless, allowing the combined screen to be extended vertically as well as horizontally as shown in the Figures. It is felt that having only a single edge frameless on each device would be disadvantageous, as it would then be necessary for each device to be "handed", with its latches on either the left or right hand side and the sockets on a corresponding device to be on the right or left hand side respectively. This would make the device either left- or right-handed, so that a left-handed device could not connect to another left handed device, and *vice versa,* which would make such a device 50% less versatile than the present invention immediately (because it would not be able to connect with half of all the other devices which would also be left-handed).

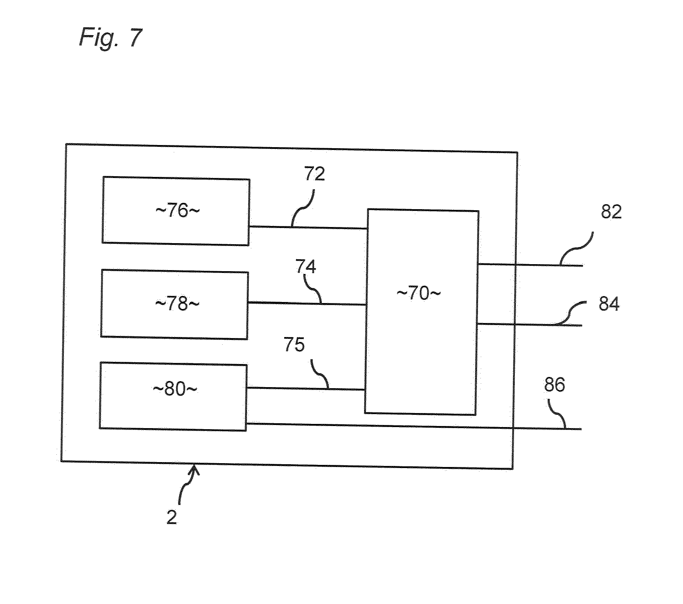

Referring now to Figure 7, this is a schematic diagram showing only those elements of the device 2 which are relevant to the present invention and necessary for demonstrating its electronic and functional arrangements; it has been considerably simplified for clarity over a typical mobile telecommunications and computing device. Device 2 comprises a central processing unit (CPU) 70 which incorporates a software-enabled operating system (OS). CPU 70 is linked via lines 72, 74, 75 to "personal" resources 76 and "volatile" resources 78 and a battery 80 of the device 2. "Personal" resources as used herein means emails, applications, photographs, contact lists and details, calendar entries, gaming scores and other personal data all of which are personal to an individual, the owner of the device 2; "volatile" resources as used herein means RAM, processor, camera, GPS, display, speakers, microphones, telephone call/receive capability, gaming applications and all other features of the device or data stored therein which are not of a personal nature. CPU 70 is connectable for the purposes of sharing functionality with another device (not shown) through lines 82 and 84, and battery 80 is connectable with the battery or power supply of the other device through line 86; these connections may be physical, and can be incorporated in the matching latches 16 and sockets 20 (see Figure 2) formed in the frameless edges of the device (with all the lines going through a single latch/socket connections, or being distributed between two or more of these) or they may be wireless (e.g. WiFi), as is well known in the art of interconnecting electronic devices, or they may be a combination of both types. The line 82 represents a USB, LAN or similar connector for the display, storage, camera, accessories and basic information or instruction transfers between device 2 and another device with which functionality is to be shared. Line 84 represents a high speed bus for RAM and CPU instructions between the devices (e.g. high speed optical, PCI Express, or thunderbolt), and line 86 represents a two-way battery/power connector.

The operation and functionality sharing between a device 2 and another electronic device is as follows. The devices are connected together as described above, with both devices turned on and in the open position of Figure 3. Each device has a software-enabled OS that controls its own resources like the screen, camera, CPU, memory, or storage. This OS also has a capability to connect with the other compatible operating systems in the other compatible device. In the user settings of each device the user can pre-define what resources to share with a connected device, and require a password for such sharing. There can also be preset settings for different phones, or phones which are recognised. If both devices belong to the same user a "Personal setting" is applied, so that the user can choose to share all resources with the other device, and if a user is docking to a friend's device a "Friend Setting" can be applied so that the user can restrict sharing personal resources but allow the sharing of volatile resources.

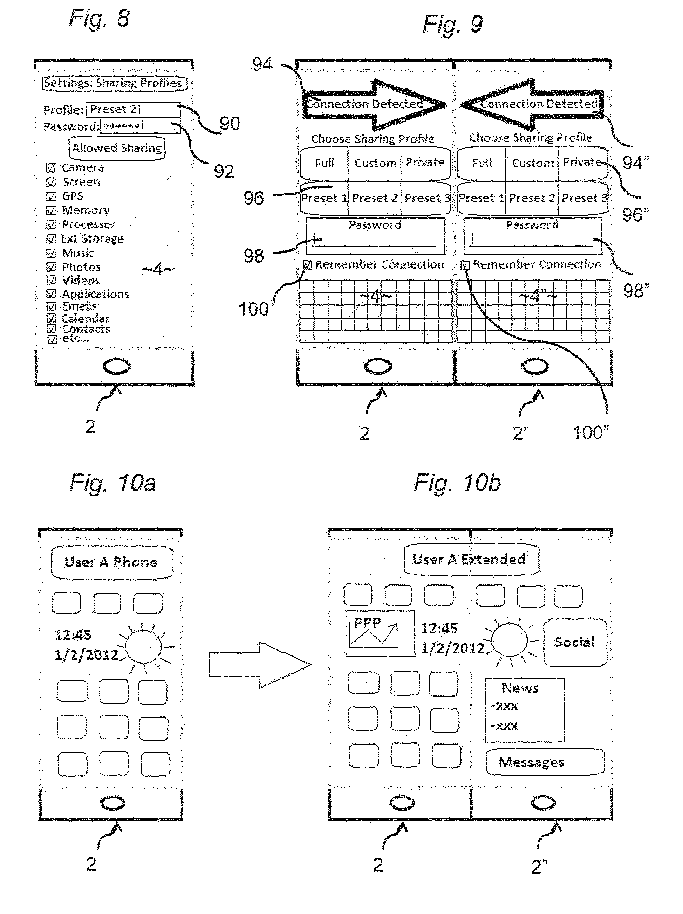

In the user settings, or when both devices are being connected, the OS will ask the owner of the device the resources of which are to be shared to choose the sharing setting, authorise the connection, and confirm said connection with a password (which could also be any biometric authentication). This is illustrated in Figure 8, which shows the screen display 4 of a device 2 in the "Settings" mode, where the user has to input the name 90 of the sharing configuration, or profile, a password 92 and then decide on the resources to be shared under that profile (by ticking the boxes against each named resource. Sharing settings can be "personal", "Private" (where the friend's personal resources and information would not be shared), or an intermediate, customised sharing setting or a saved preset setting. These processes and settings can be stored and remembered so that future connections are automatic between known devices. Once the devices are connected, and the Operating Systems know who is the user, which device is the Master device, and which resources are being shared by each slave device, then the Operating System of the user's device (Master OS) will take control of the friend's device and operating system (Slave OS) and will send instructions to it so that:
(a) Display - Both screens can display together the Master OS's Extended or Tablet display with the user's own settings, widgets, and applications plus a link to the other device shared items. (This is done by the Master OS sending the video feed or display instructions to the Slave OS which in turn will project it in its screen); if the screen is a touch screen, the Master OS can instruct the Slave OS so that the combined screen displays a larger, single functional touch screen - this will also apply to physical buttons;
(b) Memory - The Master OS or running applications will be able to send memory data to the Slave OS to be stored in its RAM for later retrieval;
(c) Applications - The Master OS can order the Slave OS to run local or remote, background or main applications for a more efficient resource optimization and multitasking experience;
(d) Calculations - When the CPU load on the main OS is high, it can Outsource part of the work to the slave OS which will calculate the answers in its own CPU and memory. Additionally the Master OS or running applications can order the Slave OS to perform calculations or operations through the Slave CPU to reduce the load on the Master CPU;
(e) Battery - If one device's battery is running low, it can directly take operating power, or even recharge from the other device;
(f) Camera - The main OS can use the Slave OS's camera in order to record two simultaneous video feeds (front and rear) or to record a 3D feed or a 3D Scan using the main cameras of both devices, and/or
(g) Ports - The Master OS can also have access to any free shared external storage devices or ports (e.g. micro SD card slots, USB, or HDMI output ports) to effectively double its storage capacity and increase its connectivity.

Figure 9 illustrates a typical display on two adjacent screens 4, 4" when two devices 2, 2" are adjacent/connected mechanically, and in the process of being connected functionally - the OS of each device having recognised the connection and displayed this at 94, 94". On each screen, the user is prompted to input a desired sharing profile at 96, 96" and the password at 98, 98" specific to the respective device OS to allow the sharing of functionality. There is also an option, at 100, 100" to instruct the or each device 2, 2" to remember the connection, so that if the same two devices are connected again subsequently, the OS's do not require any profile input, only the password (or, for trusted connections, even the password could be omitted.

Figure 10a shows a typical display on a single device 2, and in Figure 10b a typical display when two devices 2, 2" are connected mechanically (or are adjacent) and functionally, and are sharing display functionality. As can be seen, the combined screens of Figure 10b are larger than one screen on its own, and therefore can display twice as much information as a single screen.

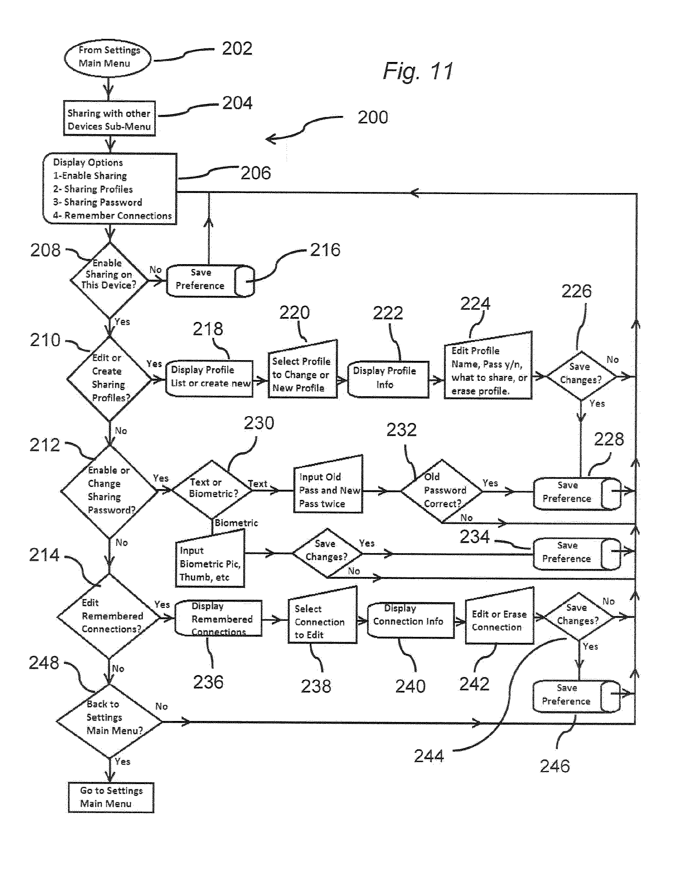

Figure 11 shows a flowchart illustrating the algorithm 200 for setting the level of access for shared functionality, or profile, on a device, from the device's main "Settings" menu, and the algorithm 200 will be described with reference also to Figure 8. Form the Settings Main menu 202, the algorithm shifts to a device sharing sub-menu 204 in response to a user input. The algorithm displays options 206 for the user to input, such as to enable sharing 208, to edit or create sharing profiles 210, to enable or change sharing password 212, and to edit remembered connections 214. A user can either run through all options, or pick one. At the enable sharing option 208, if the user inputs a no, the option of saving this preference may be provided 216, or the algorithm reverts to the options choice 206. In the sharing profile option 210, the algorithm gives the option 218 of displaying a list of previously-created profiles or of creating a new sharing profile for a user to select 220, and displays 220 the appropriate information (blank where creating a new profile). The user then inputs or edits the data as desired 224, and is given the option of saving any changes 226, 228. This is reflected, in the display of Figure 8, in the resource boxes shown therein.

The next step is the sharing password step212, in which the user can opt between a text or a biometric password; having chosen, the algorithm seeks the appropriate data, verifies it 232 in the case of a text password, in a process well-known in the field, and saves the password 228 or 234. At the step of remembering connections 214, the algorithm displays remembered connections 236, prompts the user to choose between connections for one to edit or create 238 and displays the data relating to the chosen connection 240 for the user to edit or erase 242. The algorithm gives the user the option to save changes 244, 246, and then reverts to the display options 206.if no main option 208, 210, 212, 214 is chosen, the algorithm asks 208 whether or not to go back to the main menu and, depending on the user response, either does so or reverts to the display options 206.

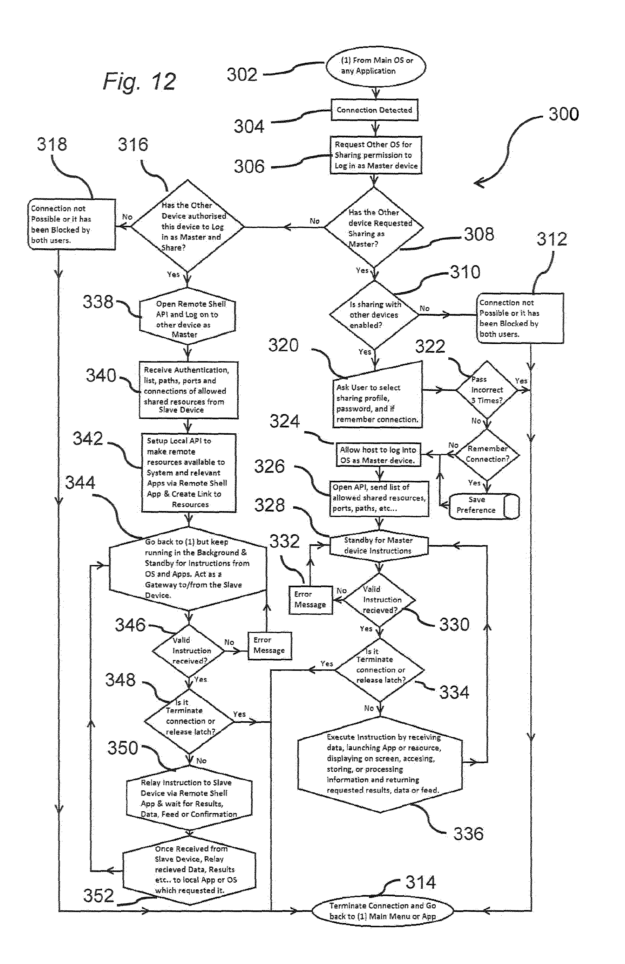

Figure 12 is a flowchart showing the process steps of the algorithm enabling functionality sharing between two connected devices which are connected, by adapting the respective operating systems of each device (with reference also to Figure 9). From the main OS 302 a connection between the two device is detected 304 and the OS requests the other OS for sharing permission to log in as a "master" 306. The OS then considers whether or not the other device OS has requested sharing as "master" 308. If yes, the OS considers at 310 whether or not sharing has been enabled on its device; if not, or connection has been blocked by both users, connection is not possible 312 and the attempted connection is terminated 314 and the OS reverts to its main menu or Application. If the other device has not requested sharing as "master", the OS considers whether or not the other device has authorised the OS device to log in as "master" and share functionality 316 - if no, connection is not possible 318 and the connection is terminated 314.

If at stage 310 sharing is indeed enabled, the algorithm prompts 320 the user to select a sharing profile (as a "slave" device), to input the relevant password and to indicate whether or not the connection is to be remembered and associated data stored. This is reflected, in the display shown in Figure 9. After a standard password verification routine 322, the algorithm either terminates the connection 314, or proceeds with the connection 324. The algorithm opens the application program interface (API) and sends to the other OS a list of the permitted shared resources, personal and volatile 326, and then stands by for instructions from the "master" device OS 328. There is a standard check as to whether a received instruction is valid or not (in which case the instruction is ignored and an error message generated 332), and the instruction is filtered 334 if it is to terminate the connection or it is a latch release signal - if it is either of these, the connection is terminated 314, otherwise the OS executes the valid instruction 316.

If at stage 316 the other device OS has authorised the log in of this device as "master" and sharing, the OS opens the remote shell API (in the other device) and logs in 338. The OS then receives 340 a list of authorised resources (the other OS being at step 326), and sets up its own API 342 to make the listed resources on the other device available for use locally. The OS then 344 stands by for instructions requiring sharing of resources between the two devices; on receipt of these there are validity and terminate/disconnect subroutines 346, 348 (equivalent to steps 330, 332, 334). If the instruction passes these checks, the OS relays 350 the relevant instructions to the slave device via the remote shell API, and receives 352 data, results, etc. from the "slave" device and supplies them to the local resource or function which requested/requires it.

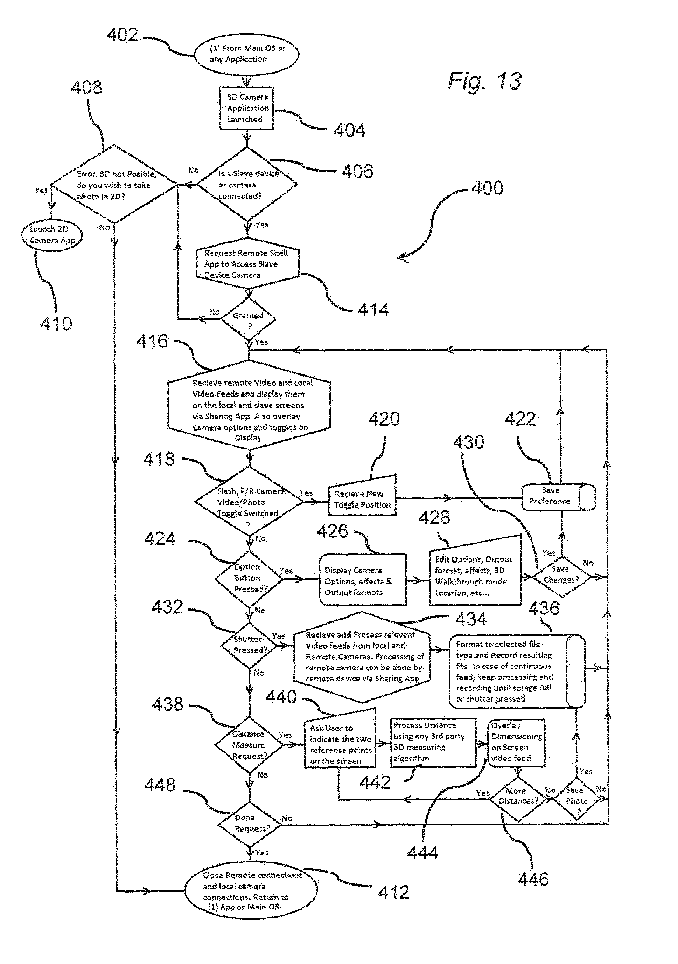

Referring now to Figure 13, this illustrates the algorithm 400 for sharing a functional resource of two connected devices - in this case, sharing the camera functions of two devices (which advantageously enables a 3D camera facility). From the "master" OS 402 the 3D camera application is launched 404, and the OS checks whether a "slave" device having a camera is connected 406; if not, an error message is generated 408 and the OS asks the user if a 2D camera facility is required instead: if so, the normal 2D camera application is opened 410, otherwise the camera connections are closed and the OS returns to the main menu 412.

If at stage 406 a "slave" camera is connected, the OS requests 414 the remote OS for access to the "slave" camera (which could be pre-authorised in the "slave" device's sharing profile, or could require a user input such as a password). If refused, or if the other camera is incompatible, the OS reverts to the error message stage 408 and either opens the 2D camera or closes the 3D camera application as previously described. If at stage 414 the request is "granted", the OS prepares to receive the video feeds from both its own camera and that of the remote ("stave") device, and displays them on the local ("master") and/or remote screens 416. If these screens are 3D capable, the feed will be displayed in 3D. The OS also initiates the display of camera options and/or toggles for the two cameras. If a toggle is switched (to switch on/off the flash, switch on/off or between the front and rear cameras, between video and photo, etc.) this is received 420, saved as a preference or not 422 and the OS returns to step 416.

If an Option button is pressed 424 (so as to add camera effects, change camera options or camera output format, for example), the OS displays the option selected 426, allowing the user to initiate a desired option 428. The OS may save the changes 430, as a preference 422, and returns to stage 416. The output format can also be non-photographic, such as a 3D wireframe, or a 3D walkthrough rendering for a 3D visualization.

If the camera shutter button is pressed 432, the OS receives and processes the respective video or camera feeds from the local and remote cameras, and processes these by way of a sharing application 434. The feeds are formatted to a selected file type and stored 436; if the feed is continuous (i.e. video, or series shots) the OS continues to process the feeds and store them, until the storage is full or the shutter is released (or pressed again, to halt recording). The OS then reverts to stage 416.

If a user requests a distance measurement 438 (using a 3D camera, or two connected cameras, for distance measurement between two points in view is well-known in the art; it is another advantage of this invention, where the two phones are of the frameless type, that the connected devices can be used for this purpose) the OS prompts the user to designate two reference points on the (combined) screen display 440, and then processes according to any algorithm to produce the measurement 442, which is then displayed on the screen, or overlain on the screen display 444. The OS may ask if more distances are required 446, and start the subroutine again, and it may save the picture with the distance in a suitable file format. It then reverts to stage 414.

While the OS is at stage 414, if no instructions are received over a period of time, the OS will prompt the user to indicate whether or not the 3D camera facility is still required 448; this is usually so as to save battery charge, with the OS returning to the main menu and closing the 3D application or keeping it "live" according to the user's indication.

Other features and advantages of such arrangements will be apparent to those skilled in the art. For example, if someone uses and carries two phones every day, the invention provides a solution by which both phones could be docked together and (when closed) each side would work as an independent phone, but when opened: both devices would communicate with each other and sum all their resources to provide a tablet experience to the user. Devices such as mobile phones in accordance with the invention could be sold in multiples, or kits, so that a family could purchase a number of phones for individual use, but on long trips the parents could give their phones to be connected to their children's phones so that the children can use the joined phones as a gaming device. Alternatively, a family could buy a phone for each family member, and additionally they buy (or the supplier or carrier offers for free) another, extra phone which could be shared, so that any family member could convert their phone into a tablet without compromising another family member's phone. Although the shared unit will be the same for all family members, each member would have their own personalized tablet experience with their own configurations, desktop setup, and applications (this would be very attractive commercially because it encourages brand fidelity not just individually, but within the whole family). This is made possible with the sharing Operating System of this invention. It is also advantageous that any device can take the role of the Master device, and also take the role of the Accessory or Slave device for any given connection following the user's instructions since both devices are essentially identical or similar in features and/or have compatible Operating Systems.

It will of course be understood that many variations may be made to the above-described embodiment without departing from the scope of the present invention. For example, the Figures illustrate the joining together of similar devices; the devices do not have to be similar, but only need compatible Operating Systems and to be configured and/or for compatible functional connection - accordingly one device could be a mobile phone, the other(s) connected to it and sharing functionality could be a tablet, camera, phone, portable music player or other compatible portable electronic device. Some electronic devices are already suitable for interconnection, although not having frameless edges; it is envisaged that such devices could be adapted to operate in the manner contemplated herein by a retrospective update to their operating systems (a software update) - even though such devices would not have such a useful combined screen, because of the presence of the noticeable frames at the edges of the screens, being able to share functionality would be advantageous.

## Claims

1. A portable communication and computing device comprising a display screen having at least two edges, each of which edges appears frameless and is adapted and/or configured for releasably joining the device to a matching edge of another portable electronic device with a display screen to provide a larger, substantially seamless display screen, the devices both being adapted selectably to share functionality when joined together, wherein the device comprises a central processor unit (CPU) containing a software-enabled operating system (OS), wherein the OS is adapted to configure its device as a "master" or "slave" to the OS of another device to which it is releasably joined for sharing functionality between the devices, and wherein the OS is adapted selectably to give different and personalized levels of access of the "master" device OS to the personal and/or volatile resources of the "slave" device for sharing functionality between the devices.

2. A device according to Claim 1 wherein the level of access is set by the owner of the "slave" device.

3. A device according to Claim 1 or 2 wherein the display screen is substantially rectangular, the two edges being on opposite sides of the screen.

4. A device according to Claim 1, 2 or 3 wherein the configuration for releasably joining the device to another is adapted to fold, to allow the two devices to hinge around the matching, joined edges.

5. A device according to Claim 4 wherein selection of shared functionality is effected by folding the two devices into an open position where the two display screens are substantially in the same plane.

6. A device according to any preceding Claim comprising mechanical latches provided along at least one of the two edges.

7. A device according to Claim 6 comprising sockets adapted to receive the latches formed in one or both of the edges of the device.

8. A device according to Claim7 wherein the latches are releasably received within the sockets.

9. A device according to Claim 6, 7 or 8 wherein the latches are adapted to provide a functional connection between the joined devices.

10. A device according to any preceding Claim comprising a magnet adjacent one or both of the two edges.

11. A device according to Claim 10 wherein the or each device is adapted to configure as "master" or "slave" in response to an input made by a user to one or both devices.

12. A device according to any preceding claim wherein the or each device is a mobile telephone.

13. A device according to Claim 11 or 12 wherein the device is connected to a further electronic device, the OS's being adapted to allow the "master" device OS full access to the functionality of the further device.

14. A kit comprising at least one device in accordance with any preceding claim, and at least one other portable electronic device having at least one matching edge, the devices being adapted and/or configured for releasable interconnection and for sharing functionality.

15. A system for connecting a portable communication and computing device functionally to another portable electronic device, both devices having a display screen and a software-enabled operating system (OS) which controls various functions and/or resources of the respective device, wherein each OS is adapted, in response to connection of the two devices, to configure its device to operate as either a "master" or a "slave" to the other device OS for sharing functionality and/or resources between the connected devices and wherein the or each OS is adapted, on connection of the two devices, to select a sharing configuration which is effective in the device configured as a "slave" to allow a personalized level of access of the "master" device OS to the personal and/or volatile resources of the "slave" device", the level of access being input by a user into the "slave" device.

16. A system according to Claim 15 wherein the or each OS is adapted to store a plurality of sharing configurations, each having a different level of access to the personal and/or volatile resources of the device.

17. A system according to Claim 16 or 17 wherein the device OS's are adapted to configure as a "master" or "slave" in response to an input made by a user to at least one of the devices.

18. A system according to Claim 15, 16 or 17 wherein the input made by a user is made prior to the connection of the two devices.

19. A system according to any of Claims 15 to 18 wherein both devices are adapted for releasable connection both functionally and mechanically and both devices are provided with cameras, the OS's being adapted to share camera functionality so that the "master" device OS can be used to control both cameras to operate in concert.

20. A system according to any of Claims 15 to 19 wherein both devices are adapted and/or configured to share display functionality, so that the "master" device OS can be used to control both display screens to operate in concert.
